Europäisches Patentamt

European Patent Office

Office européen des brevets

(19)

(11) Veröffentlichungsnummer: **0 310 714**
**B1**

(12)

# EUROPÄISCHE PATENTSCHRIFT

(45) Veröffentlichungstag der Patentschrift:
25.07.90

(21) Anmeldenummer: 87202371.8

(22) Anmeldetag: 30.11.87

(51) Int. Cl.⁵: **B65G 1/04, B66F 9/06, B66F 9/12**

(54) Lagersystem für Paletten.

(43) Veröffentlichungstag der Anmeldung:
12.04.89 Patentblatt 89/15

(45) Bekanntmachung des Hinweises auf die Patenterteilung:
25.07.90 Patentblatt 90/30

(84) Benannte Vertragsstaaten:
AT BE CH DE ES FR GB GR IT LI LU NL SE

(56) Entgegenhaltungen:
DE-A- 2 239 126
DE-B- 1 245 857
DE-C- 891 825
GB-A- 1 295 649
GB-A- 2 052 457
US-A- 3 817 406
US-A- 4 103 795

(73) Patentinhaber: MAGCON BEHEER B.V., 34,
Papegaailaan, NL-2566 XS The Hague(NL)

(72) Erfinder: Weggelaar, Franciscus Gerardus Antonius,
Papegaaiilaan 34, NL-2566 XS Den Haag(NL)

(74) Vertreter: Keijser, Johannes Maurits L.F., Mr. et al,
EXTERPATENT B.V. P.O. Box 90649, NL-2509 LP The
Hague(NL)

**Beschreibung**

Die Erfindung bezieht sich auf ein Lagersystem für Paletten, das ein Palettenregal mit einem oder mehreren Wagen sowie eine Fronttransporteinrichtung umfaßt, wobei das Lagerregal aus Ständern aufgebaut ist, die untereinander durch Längs- und Querträger verbunden sind, wodurch in jedem Fach auf verschiedenen Trägerebenen Kanäle für die Palettenlagerung entstehen und wobei in der Längsrichtung eines jeden Kanals auf den Querträgern des Regals Schienen angebracht sind, auf denen ein Wagen in Längsrichtung durch den Kanal fahrbar ist, der mit Laufrollen und einem Antrieb dafür versehen ist, und das mit Einrichtungen für das Heben einer beladenen Palette ausgestattet ist.

Unter diese Beschreibung, die mit dem Oberbegriff des Patentanspruchs 1 übereinstimmt, fallen verschiedene bekannte Lagersysteme. Bevor diese besprochen werden, müssen jedoch einige Anmerkungen gemacht werden zum guten Verständnis der Lagerbestimmung bei Systemen mit Lagerung je Kanal im Hinblick auf das System, das bekannt ist als "Reihenregal".

Reihenregale sind aus Ständern aufgebaut, die im wesentlichen nur durch Längsträger verbunden sind. Dazwischen entstehen dan Lagerfächer, die von Querverbindungen frei sind, lediglich mit Ausnahme der Verbindungen oberhalb der obertsten Stapelebene, denn diese letztgenannten Verbindungen sind natürlich erforderlich für den Erhalt einer ausreichenden Stabilität des ganzen Systems. In den Fächern ist jedoch die vollständige Höhe sämtlicher Stapelebenen für einen Gabelstapler frei zugänglich, der mit einem zur verlängernden Mast versehen ist, mit dem die Paletten immer auf der gewünschten Ebene abgesetzt bzw. davon abgehoben werden können. Reihenregale sind zwar sowohl für die LIFO-Methode als auch für die FIFO-Methode geeignet – im ersten Fall natürlich, wenn an beiden Seiten der Fachtiefe ein Gang vorhanden ist –, aber die wichtigste Einschränkung ist, daß sie nur dann geeignet sind, wenn die Anzahl der Paletten eines gleichen Artikels so groß ist, daß ein ganzes Fach dafür vorgesehen werden kann; sonst entsteht ein zu großer Füllungsgradverlust. Das Einlagern und Auslagern kann schließlich nur geschehen, indem der Reihe nach jeder Palettenplatz (der Bodenraum, über dem sich auf allen Ebenen Paletten befinden können) vollständig aufgefüllt bzw. ausgeräumt wird. Die Gabelhubwagen sind schließlich nicht imstande, ihre Gabel im Hinblick auf den Mast soweit auszufahren, daß dieser weiter reicht als der erste erreichbare Palettenplatz oder höchstens der zweite bei Benutzung eines "Reach-Trucks". Wenn die Anzahl der Paletten je Artikel, auf dem das Lagerkonzept basiert werden muß, nicht so groß ist, kommt man dazu, die Kanaltiefe zu begrenzen. Man kann dann zwei Abteilungen rücklings gegeneinander mit Gängen an beiden Seiten aufstellen, aber dies bringt dann wieder die Einschränkung auf die LIFO-Methode mit sich, was die Reihenfolge des Einlagerns und Auslagerns betrifft.

Reihenregale haben noch einige andere Einschränkungen. Der Gabelstapler muß immer mit seiner beladenen Palette in die vollständige Freitiefe eines jeden Fachs ein- und ausfahren. Der seitliche Speilraum ist dabei praktisch immer auf einige Zentimeter begrenzt. Es muß also sehr vorsichtig gefahren werden, um Zusammenstöße mit dem Regal zu vermeiden, und dies läuft darauf hinaus, daß die Hubfahrzeuge immer langsam arbeiten. Dann ist noch ein Aspekt der Unsicherheit damit verbunden. Es ist zwar im allgemeinen nicht gestattet, daß ein Gabelstapler wegen der dann verringerten Stabilität mit der Last in hochgehobener Stellung fährt, aber bei Reihenregalen ist dies unvermeidlich. Die Paletten werden nämlich auf kurze Trägerstücke abgesetzt, die in Bezug auf die Ständer oder in Bezug auf die Längsträger (oder beide) über eine kurze Entfernung in Querrichtung im Fach stecken. Diese Entfernung, also die Länge dieser kurzen Profile, ist natürlich so gewählt, daß eine darauf abgesetzte Palette immer auf beiden Seiten gestützt wird. Dadurch ist es unmöglich, eine Palette innerhalb des Fachs anzuheben. Die Folge ist, daß die Palete im Gang bis auf eine kurze Entfernung oberhalb der vorgesehenen Ebene gehoben werden muß, während das Hubfahrzeug in dieser Stellung in das betreffende Fach in der ganzen Tiefe einfahren muß. Es ist klar, daß wenn auf höheren Ebenen gearbeitet wird, eine zunehmende Genauigkeit beim Arbeiten mit dem Hubfahrzeug erforderlich ist, was sich wieder nachteilig auf die Arbeitsgeschwindigkeit auswirkt.

Schließlich haben Reihenregale noch das Problem, daß es viele Hubfahrzeuge gibt, deren Breite an der oberen Seite zu groß ist, um mit ausreichendem Spiel zwischen die Stützträger zu passen. Dies kann nur beseitigt werden, indem die zweite Ebene so hoch gelegt wird, daß das Hubfahrzeug unter die Träger paßt. Dadurch geht über der untersten Ebene (dort wo die Paletten auf dem Boden abgesetzt werden) Platz verloren. Die Alternative ist, daß man in der Wahl des Hubfahzeugtyps eingeschränkt ist, und zwar auf jene, die so niedrig sind, daß man die zweite Ebene ohne Verlust aufstellen kann, wo sich dies aus den Abmessungen der beladenen Paletten ergibt.

Hauptsächlich aufgrund dieser Erwägungen im Zusammenhang mit Reihenregalen gibt es einen Bedarf an Systemen, bei denen kanalweise gearbeitet werden kann, und zwar mit einer Arbeitsgeschwindigkeit, die nicht durch Manövrierprobleme innerhalb der Fächer eingeschränkt wird. Unter "Kanal" oder "Tunnel" versteht man dann den ganzen zur Verfügung stehenden Raum auf gleicher Ebene in der vollständigen Tiefe eines Fachs zwischen den Ständerreihen, wobei eventuell die Entfernung zwischen diesen Ständerreihen so groß gewählt werden kann, daß es Platz gibt für zwei nebeneinander liegende Kanäle auf gleicher Ebene.

Ein derartiges System ist bekannt, wie aus dem oben im ersten Absatz zitierten Oberbegriff des Patentanspruchs 1 ersichtlich ist, und zwar aus dem Artikel «Hochregal-Blocklager-System – ein vollautomatisches und hochflexibles Tunnellager» von R. Bchmann u.a., veröffentlicht in der Zeitschrift «f + h – fördern und heben» 35, (1985), Nr. 10, S.

Nr. 764–768, bei dem ein Wagen ganz unter die Paletten in den Schienen fahren kann. Dazu stehen die Paletten auf den Schienen und sind die Schienen als liegende U-Profile ausgeführt, wobei die Räder des Wagens innerhalb dieser U-Form fahren. Innerhalb der Höhe des Wagens, also auch innerhalb der Höhe des liegenden U-Profils, ist außer einem Antrieb auch ein Hubmechanismus vor einer Ebene angebracht, die im wesentlichen genauso groß ist wie der Wagen selbst und mit dem eine Palette so weit gehoben werden kann, daß sie von den Schiene frei wird und durch den Wagen verlagert werden kann.

Als Fronttransporteinrichtung sind zwei Varianten vorgeschlagen. Die eine ist ein Aufzug innerhalb des Raums eines Palettenplatzes im Regal, der mit einem Verteilerwagen auf jeder Ebene außerhalb des Regals zusammenarbeitet, wodurch eine Palette vor dem betreffenden Kanal auf diese Ebene gebracht werden kann. Der oben kurz beschriebene eigentliche Kanalwagen sorgt dann für die Überbrückung des Zwischenraums zu den Schienen im Regal. Die andere Variante ist ein mit einer Hubebene versehener Mast, der in einer Schiene fährt in Bezug auf den Boden. Auch von dieser Hubebene muß zu den Schienen in jedem Kanal eine Entfernung überbrückt werden.

Die in den Kanälen fahrenden Wagen sind autonom; es ist ein computergesteuertes Such- und Lagerungssystem vorhanden. Auch der Aufzug und der Verteilerwagen bei der ersten Ausführung und die fahrende Säule mit der Hubebene bei der anderen Ausführung werden auf diese Weise gesteuert.

Ein nicht unerhebliches Problem dieser Systeme, die auch als Satellitenanlagen wohlbekannt sind, ist, daß die Höhe der Schienen bzw. des Wagens innerhalb des ganzen Systems einen Verlustfaktor bildet, der sich für jede Ebene wiederholt. Weiterhin enthält jeder Wagen, der bezweckten Autonomie wegen, eine eigene Batterie. Auch dies bildet einen beträchtlich kostenerhöhenden Faktor.

Dieses bekannte Lagersystem ist aus verschiedenen Gründen sehr teuer. Die Regalkonstruktion ist eine spezielle, schwere Konstruktion und das automatische Steuerungssystem, das mit großer Genauigkeit arbeiten muß, bringt auch große Grundkosten mit sich. In der Praxis ist das System dann auch nur für sehr große Lager wirtshaftlich anwendbar, hauptsächlich bei Produktionsbetrieben. Vollständigkeitshalber wird hier angeführt, daß das System sowohl die FIFO- wie auch die LIFO-Methode zum Ein- und Auslagern zuläßt.

Weiterhin sind Durchlaufregale und Laufpalettenregale bekannt, zum Beispiel aus der Broschüre von Röchling-Burbach, «Rollenpalettenlager». Die erstgenannten sind mit Rollgängen versehen, sowohl in einer nicht angetriebenen als auch einer angetriebenen Ausführung. Diese lassen nur die FIFO-Methode zu, so daß in jedom Fall Raum für einen Gang sowohl an der Vorder- wie auch an der Rückseite gebraucht wird. Rollgänge sind ziemlich teuer, und dies gilt noch mehr für angetriebene Rollgänge. Wenn sie nicht angetrieben sind, gibt es beträchtliche Einschränkungen im Hinblick auf die Anwendung (Gefälle, Stabilität der Last, Ausführung der Palette, Länge der Kanäle, Staudruck usw.), die im übrigen zum Teil auch für die angetriebenen Ausführungen gelten.

Die Laufpalettenregale haben in Längsrichtung der Kanäle laufende Schienen, wobei jedoch für jede Palette ein fahrbares Untergestell erforderlich ist. Man hat zwar die Wahl, eine Standardpalette auf ein derartiges Untergestell abzusetzen, oder die Last direkt auf einer Spezialpalette zu stapeln, die mit Rädern versehen ist, aber es ist klar, daß beide Systeme schwerfällig sind und auf jeden Fall zu einem sehr teuren System führen.

Als gemeinsamen Vorteil haben Durchlaufregale und Laufpalettenregale wohl, daß schneller gearbeitet werden kann, den nach Absetzen der Palette braucht nicht gewartet zu werden, bis die Palette ihren Platz im Lager erreicht hat. Namentlich für Anwendungsgebiete, in denen eine große Anzahl von Paletten täglich gehandhabt werden müssen, können diese Systeme vorteilhaft sein.

Die Erfindung bezweckt, ausgehend vom eingangs im ersten Absatz beschriebenen Lagersystem mit kanalförmiger Lagerung, eine größere Anwendungsflexibilität zu erreichen, insbesondere also auch die wirtschaftliche Anwendbarkeit bei kleinerem Umfang des gesamten Systems, mit einem niedrigen Kostenpreis und mit Vermeidung des Nachteils, der so schwer wiegt bei Reihenregalen, nämlich die Langsamkeit der Handhabung infolge des erforderlichen genauen Manövrierens. Weiterhin muß das System dann sowohl für die FIFO- wie für die LIFO-Methode des Ein- und Auslagerns geeignet sein. Ebenfalls müssen die Probleme vermieden werden, die oben im Zusammenhang mit Durchlaufregalen und Laufpalettenregalen angeführt worden sind. Dies alles muß dann realisiert werden ohne daß das System enen Raumverlust im Vergleich zu dem Raum zur Folge hat, der immer bei der Lagerung von Paletten in Regalen wegen des Herausragens der Ladung an allen Seiten frei bleiben muß.

Gemäß dem Grundgedanken der Erfindung besitzt das Lagersystem zudem das Merkmal, daß die Schienen außerhalb der Abmessung der Paletten angebracht sind, für die der Kanal vorgesehen ist, so daß die Paletten auf den Querträgern des Regals in der Lagerung ruhen, daß der Wagen seine Fahrarme auf dem mit dem Schienen korrspondierenden Plätzen außerhalb der Palettenbreite hat, an einem Ende einen Aufbau aufweist und mit einer Gabel auf einer solchen Höhe versehen ist, daß die Zähne in die Einstecköffnungen der Paletten einsteckbar sind, während auf dem Aufbau Mittel angebracht sind, um die Palette durch die Gabel über eine Höhe heben und senken lassen zu können, die ausreichend ist, Palette und Last während der Verlagerung des Wagens im Kanal von den Teilen des Regals freihalten zu können.

Die Schienen werden auf diese Weise außerhalb der Palettenbreite innerhalb des Raums untergebracht, der immer an beiden Seiten von Paletten freigehalten wird. Dann stehen die Paletten zwischen den Schienen auf den Querträgern. Die Schienen erfordern also keine Erhöhung des Raums je Ebene. Es gibt keinen Bedarf für die Unterbringung eines wesentlichen Teils des Wagens unter der Palette. Es wird eine Gabel eines an sich gängigen Typs benutzt, während die Rollarme und die Gabel an einem Aufbau befestigt sind, der auch den Motor und dergleichen trägt und der sich während der Verlagerung einer jeden Palette außerhalb des Palettenraums befindet, aber nie dauerhaft Lagerraum einnimmt.

Im Hinblick auf den Kostenpreis und auch die Flexibilität in Bezug auf den Umfang des angewandten Systems ist der wichtigste Faktor, daß das System gemäß der Erfindung einfach eingerichtet werden kann, wenn von dem ausgegangen wird, was als normale Palettenregale bekannt ist. Im Grunde brauchen nicht mehr Anordnungen getroffen zu werden als das Anbringen der Schienen über die Querträger dieser Palettenregale. Hierdurch entstehen einige wichtige Vorteile für Reihenregale. Die normalen Palettenregale sind nämlich preiswerter als Reihenregale, weil sie, aneinandergekoppelt, ein sehr stabiles Ganzes bilden. Spezielle Verankerungskonstruktionen für die Verstrebung und auch für das Festsetzen am Boden sind nicht erforderlich. Bei Anwendung von normalen Palettenregalen sind auch weniger Ständer erforderlich, weil man zwei Paletten von 120 cm Länge je Fach zwischen aufeinanderfolgenden Ständerreihen unterbringen kann, während man bei Reihenregalen immer nur eine Palette in einem Fach zwischen benachbarten Ständerreihen unterbringen kann. Bei Reihenregalen ruhen die Paletten mit den Seiten auf den Regalträgern. Die Abstützung der Paletten läßt dann manchmal zu wünschen übrig, namentlich bei Paletten von 100 x 120 cm, wenn diese mit den 100 cm in die Tiefe gestapelt werden. Da bei der Erfindung normale Palettenregale mit vollständigen Querträgern zwischen den Ständerreihen verwendet werden können, werden die Paletten vollkommen durch diese Querträger abgestützt.

Weil bei Verwendung der normalen Palettenregale wie bereits angegeben zwei Paletten in einem Fach untergebracht werden können, wird außerdem noch der Vorteil für Reihenregale erzielt, daß man je Palettenbreite einen Raum von ca. 10 cm gewinnt. Dies beträgt auf die Gesamtabmessung des Systems ungefähr 8%.

Bei Anwendung von Reihenregalen müssen die Kanäle breit genug sein für das Einfahren eines Gabelstaplers. Die Paletten können dann auch praktisch nicht anders gestapelt werden als mit einer Länge von 120 cm in Querrichtung des Kanals. Bei der Verwendung von normalen Palettenregalen entsteht jedoch auch die Möglichkeit, Paletten von 80 x 120 cm mit den 120 cm in Tiefenrichtung des Kanals und den 80 cm in Querrichtung zu stapeln. ·

Wenn in einem Fach zwei Paletten untergebracht werden, ist es gemäß der Erfindung ausreichend, drei Schienen anzubringen; die mittlere befindet sich im Zwischenraum zwischen den Paletten und kann für beide Kanäle in diesem Fach benutzt werden. Falls innerhalb des Fachs drei Kanäle gebildet werden für die Palettenabmessung von 80 cm, sind insgesamt vier Schienen ausreichend, gemäß dem gleichen Verwendungsprinzip aller inneren Schienen für die zwei benachbarten Kanäle.

Das Problem von Reihenregalen, wonach auf der untersten Ebene infolge des Einfahrens des Gabelstaplers Höhe verloren gehen kann, gilt hier nicht mehr. Gemäß der Erfindung bleibt das Hubfahrzeug im Gang, so daß auch die unterste Ebene – die auf dem Boden stehenden Paletten – die gleiche Mindesthöhe haben kann wie die höher liegenden Ebenen. Die Schienen werden neben den Palettenplätzen direkt auf dem Boden befestigt.

Unter dem Gesichtspunkt dieser Erwägungen stellt das System gemäß der Erfindung nicht nur eine Verbesserung der bestehenden Systeme dar, wobei eine kanalförmige Lagerung möglich ist, sondern werden sogar in Bezug auf Systeme von Reihenregalen solche Vorteile erzielt, daß sie in vielen Fällen diese Reihenregale ersetzten können. Namentlich besteht bei dem System gemäß der Erfindung nicht mehr die Sicherheitsgefährdung, die durch das bei Reihenregalen unvermeidliche Fahren eines Gabelstaplers mit gehobener Last ensteht, wenn dieser mit der Bearbeitung der höhergelegenen Kanäle beschäftigt ist.

Noch ein Vorteil des Systems gemäß der Erfindung liegt darin begründet, daß auch ein Gabelstapler mit Seitenlastenabsetzung verwendet werden kann, Hierdurch können die Gänge schmaler gehalten werden und kann von einer größeren Stapelhöhe profitiert werden.

Die Erfindung wird nachstehend an Hand der anliegenden Zeichnung einer Ausführungsform erläutert, und zwar zeigt

Figur 1 schematisch eine Vorderansicht eines Fachs in einem Regal und

Figur 2 einen zugehörigen schematischen Längsschnitt, d.h. einen Schnitt gemäß der Tiefenrichtung der Kanäle;

die Figuren 3, 4 und 5 zeigen jeweils eine Seiten-, Oben- und Rückansicht eines Wagens;

Figur 6 zeigt ein Detail in größerem Maßstab, und zwar als einen teilweisen horizontalen Schnitt durch einen Träger mit dem Anfang einer Laufschiene;

Figur 7 zeigt ein anderes Detail in vergrößertem Maßstab in Form eines Kupplungssystems für den Wagen im Hinblick auf das Gabelbrett eines Gabelstaplers;

Figur 8 zeigt schematisch die verschiedenen Schritte der Arbeitsweise beim Ein- und Auslagern einer Palette im Regal mit dem System gemäß der Erfindung.

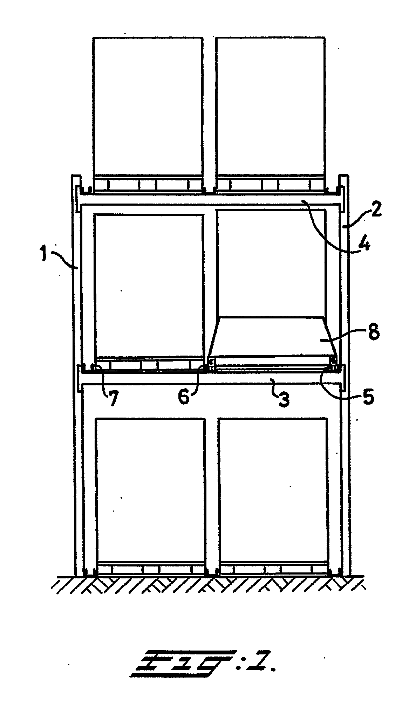

Figur 1 zeigt ein einzelnes Regalfach in Vorderansicht. Von zwei Ständerreihen sind die vordersten Exemplare 1 und 2 zu sehen. Sie sind untereinander durch Reihen von Querträgern verbunden, von denen die vordersten in Figur 1 mit 3 und 4 bezeichnet sind. Weil auf die übliche Weise auch auf dem Boden Paletten abgesetzt werden können, enstehen auf diese Weise drei Kanäle übereinander. Gezeichnet ist eine Ausführung, in der die Entfernung der Ständerreihen untereinander so gewählt worden ist, daß in jedem Fach zwei Paletten nebeneinander untergebracht werden können, so daß es je Fachbreite zwei Lagerkanäle gibt.

In jedem Fach sind über die ganze Tiefe des Fachs drei Schienen 5, 6, 7 angebracht. Diese Schienen liegen auf den Querträgern 3. Es macht im Zusammenhang mit dem Erfindungsgedanken keinen Unterschied, ob die Regale aufgebaut werden mit separaten Längsträgern – in der Tiefenrichtung der Fächer bzw. Kanäle – und Schienen, oder ob die Schienen gemäß der Erfindung auf solche Weise dimensioniert werden, daß sie die Funktion von Längsträgern erfüllen können.

Im rechten Kanal auf der zweiten Ebene ist in Figur 1 ein Wagen 8 gezeichnet,. Man sieht in Figur 1, daß dieser Wagen mit seinen Rädern in den Schienen 5 und 6 läuft und daß die Schienen außerhalb der Abmessung der Palette liegen. Wenn der linke Kanal im gleichen Fach bedient werden muß, macht der Wagen von der gleichen Mittelschiene zusammen mit Schiene 7 Gebrauch.

Aus Figur 1 ist auch ersichtlich, daß die Paletten 12 zwischen den Schienen auf den Querträgern 3 stehen.

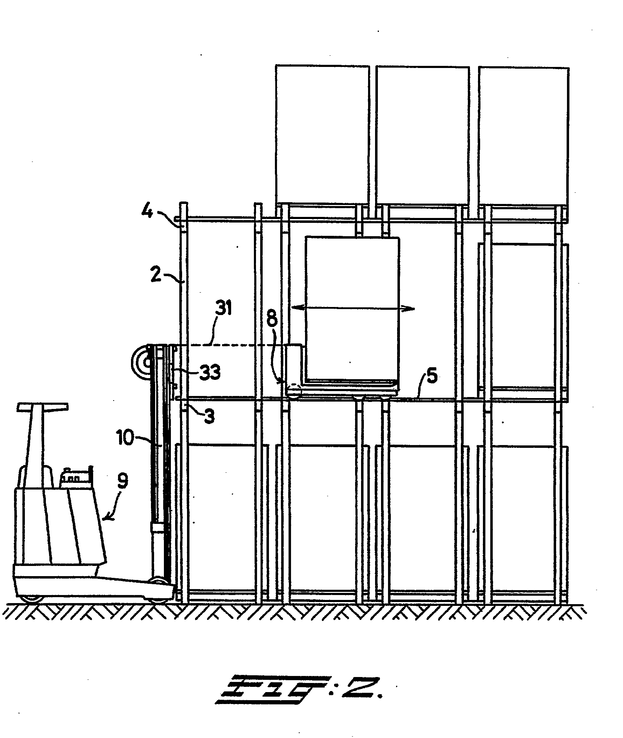

Man sieht in Figur 2 eine schematischen senkrechten Schnitt durch das Regal in Längsrichtung, also die Richtung der Tiefe der Fächer und Kanäle. Der Wagen 8 ist entsprechend der Darstellung von Figur 1 mit dem Einfahren oder Herausholen einer Palette auf der zweiten Ebene beschäftigt, während der Kanal auf der ersten Ebene ganz gefüllt ist und der Kanal auf der dritten Ebene noch einen verfügbaren Palettenplatz hat. Als Fronttransporteinrichtung ist ein Gabelstapler 9 gezeichnet, dessen Hubarm 10 angehoben worden ist bis in eine Stellung, in der auf der zweiten Ebene gearbeitet werden kann.

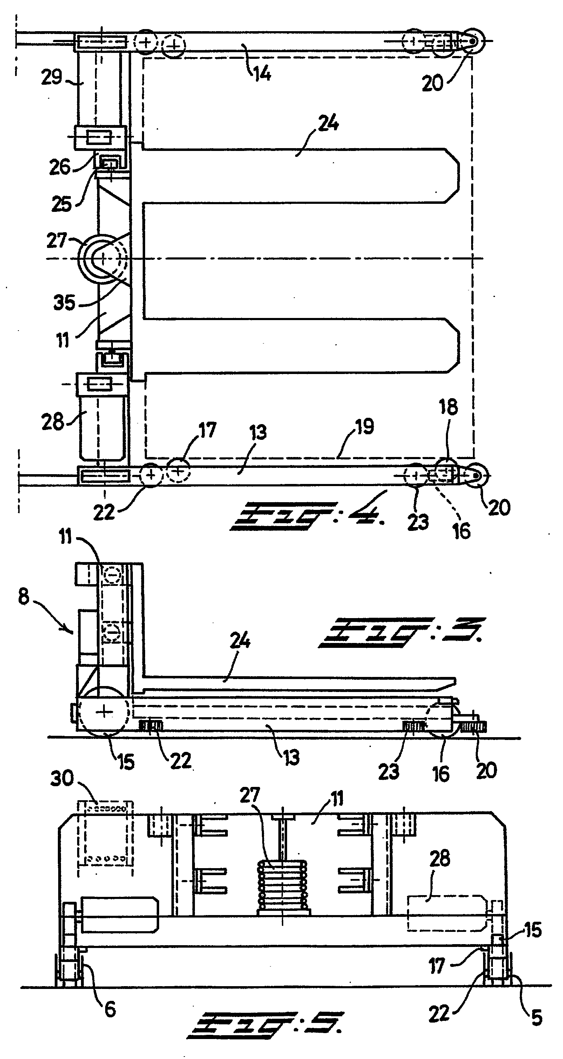

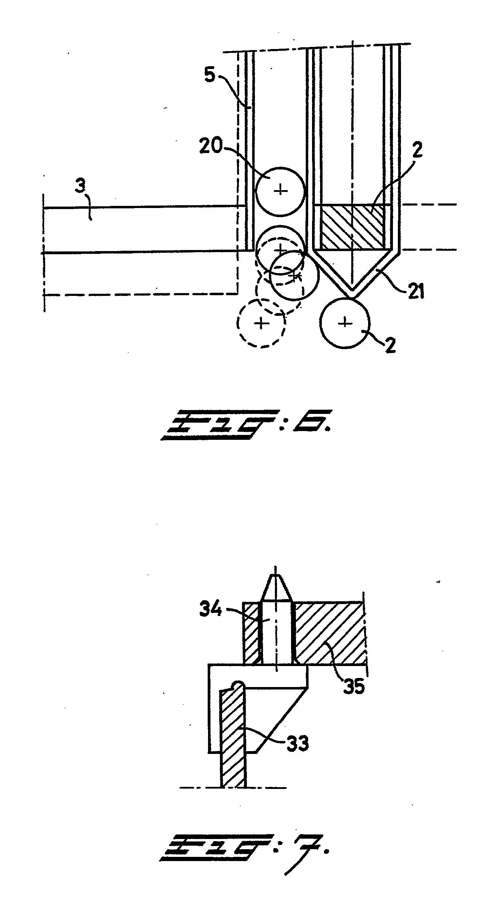

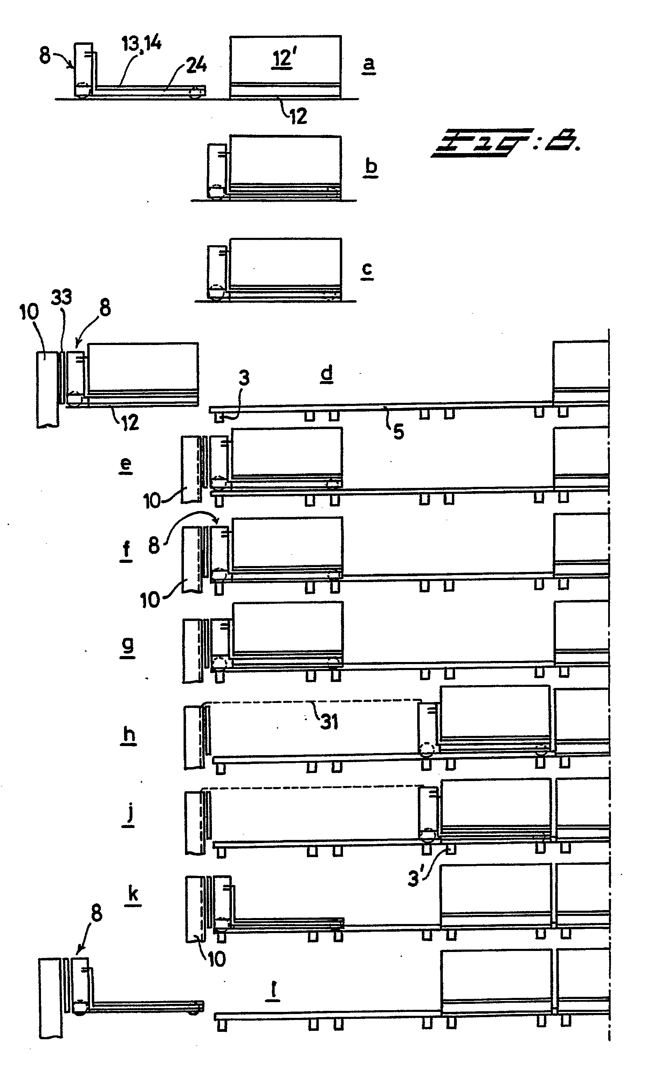

Figur 3 zeigt eine Seitenansicht, Figur 4 eine Draufsicht und Figur 5 eine Rückansicht des Wagens 8. An dem Aufbau 11 sind zwei Fahrarme 13 und 14 befestigt. Jeder Fahrarm enthält Lager für ein angetriebenes Hinterrad 15 und ein nicht angetriebenes Vorderrad 16. Damit läuft der Wagen in den Schienen 5 und 6, die vollständig in Figur 5 gezeichnet sind, aber nicht in Figur 3 und 4.

Weil sich gemäß dem Erfindungsgedanken die Fahrarme 13, 14 neben der Palette befinden, ist es von Bedeutung, eine Führung dieser Arme in Bezug auf die Palette vorzusehen. Man sieht dazu in Figur 3 zwei horizontale Leitrollen 17 bzw. 18 hinten und vorn an dem Arm. Mit einem gestrichelten Rechteck ist der Platz einer Palette angegeben und man sieht die Rollen 17, 18 dann auch an der Seite 19 der Palette liegen. Wenn sich der Wagen der Palette nähert,, während diese noch auf dem Boden steht, können die Arme dann also gut um die Palette herumgreifen. In der Rückansicht von Figur 5 ist die Höhenposition der Leitrollen wiedergegeben, denn dort ist die hinterste Rolle 17 zu sehen; diese Paletten-Leitrollen müssen natürlich über den Schienen liegen. Die Figuren 3 und 4 zeigen weiterhin, daß an den Enden beider Fahrarme noch eine Leitrolle 20 angebracht ist. Diese Rollen dienen zur Führung beim Einpassen des Wagens in die Schienen. Dazu wird verwiesen auf das Detail von Figur 6. Darin ist die Vorzugsmaßnahme gemäß der Erfindung wiedergegeben, wonach an den Vorderseiten der Ständer ein symmetrisch schräges Einführungsstück 21 angebracht ist. Als schematische Darstellung des Richtvorgangs bei der Einführung sind verschiedene Stellungen einer Leitrolle 20 am Ende eines Fahrarms gezeichnet. Der Gabelstapler braucht nur so zu manövrieren, daß die Rolle 20 gegen die richtige schräge Fläche des Einführungsstücks 21 gerät; danach wird die Rolle 20 zur weiteren Führung bis in die Schiene 5 sorgen. Es ist klar, daß eine derartige Führung an einer Seite ausreichend ist; die mittlere Schiene 6 in jedem Fach braucht nicht mit einer derartigen Einführungsführung versehen sein; es ist ausreichend, wenn der Wagen an der einen oder der anderen Seite mit seinem Fahrarm gegen ein an einem Ständer angebrachtes Einführungsstück gedrückt werden kann.

Figur 4 zeigt, daß jeder der Fahrarme des Wagens weiterhin noch mit zwei Leitrollen 22, 23 versehen ist. Wie aus Figur 3 hervorgeht, befinden sich diese Rollen auf gleicher Höhe wie die Einführungsleitrolle 20. Die Rollen 22 und 23 müssen, wie aus Figur 5 hervorgeht, in der die Rolle 22 zu sehen ist, für die Querführung des Wagens innerhalb der Schienen liegen, weil die Rollen gerade innerhalb der Schienenbreite passen.

Figur 4 zeigt, daß der Aufbau 11 eine Gabel 24 trägt, die bei Ansteuerung eines Hubmotors 27 mit Hilfe von Rollen 25 innerhalb von C-Profilen 26 senkrecht bewegbar ist. Wie auch aus der Seitenansicht von Figur 3 hervorgeht, befinden sich die Zähne der Gabel 24 auf solcher Höhe und Breite, daß sie in die normalen Einsecköffnungen einer Palette einsteckbar sind, und zwar sowohl an der langen als auch an der kurze Seite. Mit Hilfe von Stellungsschaltern oder ähnlichen für den Fachmann verständlichen Mitteln, werden an der Gabel 24 drei Höhenstellungen gegeben, eine niedrige, eine Hohe und eine Zwischenstellung, für einen Zweck, der nachstehend noch näher erläutert wird.

Zur Vervollständigung der Beschreibung des Wagens sind zwei Elektromotoren 28, 29 vorhanden, die jeder eines der Antriebsräder 15 antreiben. Dann gibt es eine Kabelhaspel 30 für ein elektrisches Kabel 31 (vgl. Figur 2), die sowohl der Stromversorgung durch eine Verbindung zwischen den Elektromotoren 28 und 29 und der Batterie auf dem Gabelstapler 9, als auch der Übertragung der Steuersignale dient. Der Wagen ist auch, soweit dies in das Steuerungssystem paßt, mit (nicht dargestellten) Signalisierungsmitteln für die Annäherung vom Ende einer freien Bahn versehen, wobei diese Mittel vorne auf den Fahrarmen 13, 14 angebracht sein können.

Für die mechanische Verbindung zwischen dem Wagen und dem Gabelbrett 33 (vgl. Figur 2) des Gabelhubwagens wird auf eine Weise, die aus dem Detail von Figur 7 hervorgeht, über diesem Gabelbrett 33 ein Stift 34 mit einem kegelförmigen Ende angebracht. An dem Aufbau des Wagens ist ein Augstück 35 angebracht (vgl. Figur 4 und 7). Der Innendurchmesser des Auges stimmt mit dem Außendurchmesser des Stiftes 34 überein. Wenn der Wagen auf dem Boden oder der Schiene ruht und sich das Gabelbrett des Gabelstaplers senkt, wird der Wagen losgekuppelt. Wenn der Gabelhubwagen die in Figur 2 wiedergegebene Position erreicht hat, kann auf diese Weise der Wagen 8 losgekuppelt werden, um ihn daraufhin durch Steuerung vom Steuerpult auf dem Hubfahrzeug 9 aus und über die Signalleitungen in dem zusammengesetzten Kanal 31 in den Kanal einfahren zu lassen.

Figur 8 zeigt schematisch die verschiedenen Schritte wie bei der Einlagerung einer Palette bzw. der Auslagerung dieser Palette gearbeitet wird.

(a) Eine einzulagernde Palette 12 mit der Last 12′ stehen mit dem Wagen 8 auf dem Boden. Die Gabel 24 befindet sich in der untersten Stelung, angezeigt durch eine Markierung auf dem Aufbau.

(b) Der Wagen ist mit der Gabel 24 in der Einsteköffnung der Palette und den Armen 13, 14 um die Seiten der Paletten herumgreifend eingefahren.

(c) Die Gabel wird bis zur Mittelstellung angehoben, so daß das Gewicht der beladenen Palette auf der Gabel bzw. dem Wagen ruht.

(d) Der Wagen mit der darauf ruhenden, beladenen Palette ist nach Ankopplung am Gabelbrett 33 am Ende des Mastes 10 des Hubfahrzeugs durch Herausschieben dieses Mastes 10 auf die Ebene gehoben, auf der die Palette gelagert werden muß. Die Palette befindet sich also vor den Schienen 5, die zu dem betreffenden Kanal gehören.

(e) Der Gabelstapler fährt nach vorne, so daß unter Anwendung der Suchbewegung, die in Figur 6 dargestellt und beschrieben ist, die Fahrarme 13, 14 in die Schienen einfahren und die Palette sich in Höhe des ersten Palettenplatzes in Kanal befindet. In diesem Augenblick fungieren nur die seitlichen Führungsräder 22, 23 (Figur 3 und 4); die Laufräder 15, 16 stehen noch nicht auf den Schienen.

(f) Durch das Herabbewegen des Hubarms 10 des Gabelstaplers wird der Wagen 8 mit der sich darauf befindenden, beladenen Palette heruntergebracht, bis die Laufräder 15, 16 des Wagens auf der Grundfläche der Schienen stehen.

(g) Die Gabel 24 wird in die höchste Stellung gebracht, wodurch sie das volle Gewicht der beladenen Palette übernimmt und die Palette in Bezug auf die Querträger 3 ausreichend hoch anhebt, um fahren zu können, ohne daß eventuell durchsackende Ladung die Querträger berührt. Die Säule 10 wird soweit hinuntergefahren, daß der Wagen 8 ausgekuppelt wird. Der Wagen ist jetzt bereit loszufahren.

(h) Der Wagen ist durch Steuerung über das abgewickelte Kabel 31 in den Kanal eingefahren und hat den weitestentfernten Platz erreicht.

(j) Die Gabel 24 des Wagens wird in ihre niedrigste Stellung gebracht, wodurch die beladene Palette auf den Querträgern 3′ abgesetzt wird. Der Wagen ist bereit, zurückzufahren.

(k) Der Wagen ist zurückgefahren zum ersten Platz in dem Kanal und wird wieder gekuppelt, indem der Hubarm 10 des Hubfahrzeugs über die erforderliche Entfernung gehoben wird.

(l) Der Gabelstapler ist zurückgefahren und hat den Wagen ganz aus dem Kanal herausgenommen. Der Wagen kann für das Aufnehmen der Palette wieder zum Boden gebracht werden.

Für die Auslagerung werden die gleichen Handlungen in umgekehrter Reihenfolge vorgenommen.

Wenn es in einem Kanal nur noch einen freien Platz gibt – den Platz, der oben als der erste Palettenplatz in einem Kanal bezeichnet worden ist, aber natürlich im Grunde beim Vollstellen des Kanals der letzte Platz ist - werden die Schritte (g) und )k), die das Ein- bzw. Ausfahren des Wagens in dem Kanal betreffen, übergangen; nach Schritt (f) werden die Schritte (h) und (j) und daraufhin (l) ausgeführt.

## Patentansprüche

1. Lagersystem für Paletten (12), das ein Palettenregal mit einem oder mehreren Wagen sowie eine Fronttransporteinrichtung umfaßt, wobei das Lagerregal aus Ständern aufgebaut ist, die untereinander durch Längs- (1, 2) und Querträger (3, 4) verbunden sind, wodurch in jedem Fach auf verschiedenen Trägerebenen Kanäle für die Palettenlagerung entstehen und wobei in der Längsrichtung eines jeden Kanals auf den Querträgern des Regals Schienen (5, 6, 7) angebracht sind, auf denen ein Wagen (8) in Längsrichtung durch den Kanal fahrbar ist, der mit Laufrollen (15, 16) und einem Antrieb dafür versehen ist, und das mit Einrichtungen für das Heben einer beladenen Palette ausgestattet ist, dadurch gekennzeichnet, daß die rollentragenden Flächen der Schienen (5, 6, 7) außerhalb der Abmessung der Paletten (12) angebracht sind, für die der Kanal vorgesehen ist, daß der Wagen (8) seine Fahrarme (13, 14) auf den mit rollentragenden Flächen der Schienen (5, 6, 7) korrespondierenden Plätzen außerhalb der Palettenbreite hat, an einem Ende einen Aufbau (11) aufweist und mit einer Gabel (24) in einer solchen Höhe vesehen ist, daß die Zähne in die Einsteköffnungen der Paletten einsteckbar sind, während auf dem Aufbau (11) Einrichtungen (25 bis 27) angebracht sind, um die Palette durch die Gabel (24) über ein Höhe heben und senken lassen zu können, die ausreichend ist, um Palette und Last während der Verlagerung des Wagens (8) in dem Kanal von den Teilen des Regals freihalten zu können.

2. System nach Patenanspruch 1, dadurch gekennzeichnet, daß der Wagen (8) an ein Gabelbrett (33) des Mastes (10) eines Hubfahrzeuges ankuppelbar ist (über 34, 35).

3. System nach Patenanspruch 1 oder 2, wobei die Ständer (1, 2) auf der doppelten Palettenabmessung (von 120 cm) stehen, dadurch gekennzeichnet, daß in jedem Fach zwischen benachbarten Ständerreihen drei Schienen (5, 6, 7) angebracht sind, von denen die mittlere (6) für beide nebeneinander liegenden Palettenplätze vorgesehen ist.

4. System nach Patenanspruch 1 oder 2, wobei die Ständer auf doppelter Palettenabmessung (von 120 cm) stehen, dadurch gekennzeichnet, daß vier Schienen in solchen Abständen angebracht sind, daß in jedem Fach zwischen benachbarten Ständerreihen drei Kanäle gebildet sind, in denen Paletten in der Breite (80 cm) lagerbar sind, wobei jede der zweiten und dritten Schiene für die zwei nebeneinander liegenden Kanäle benutzbar sind.

5. System nach einem der vorherigen Patentansprüche, dadurch gekennzeichnet, daß die Gabel (24) des Wagens (8) drei feste Stellungen hat, nämlich eine hohe, eine niedrige und eine Zwischenstellung.

6. System nach einem der vorherigen Patentansprüche, dadurch gekennzeichnet, daß die Fahrarme (13, 14) des Wagens mit Suchrollen (20) für das Einführen in die Schienen versehen sind.

7. System nach Patentanspruch 6, dadurch gekennzeichnet, daß jeder der Ständer an der Vorderseite mit einem Einführungsstück (21) mit schrägen Führungsflächen zu den beidseitig liegenden Schienen versehen ist.

8. System nach einem der vorherigen Patentansprüche, dadurch gekennzeichnet, daß die Fahrarme (13, 14) mit Leitrollen (17, 18) für die Seiten der Paletten versehen sind.

9. System nach einem der vorherigen Patentansprüche, dadurch gekennzeichnet, daß die Fahrarme (13, 14) mit Leitrollen (22, 23) in bezug auf die Schienen (5, 6, 7) versehen sind.

10. System nach einem der vorherigen Patentansprüche, dadurch gekennzeichnet, daß der Wagen (8) elektrisch durch eine Kabelverbindung (31) vom Gabelstapler (9) aus angetrieben ist.

## Claims

1. A storage system for pallets (12), which comprises a pallet rack with one or more carriages and a front transporting device, the storage rack being constructed of vertical members connected together with longitudinal (1, 2) and traverse (3, 4) members, whereby in each section channels are formed in different carrying planes for pallet storage, rails (5, 6, 7) being attached to the transverse members of the rack in the longitudinal direction of each channel, on which rails (5, 6, 7) a carriage (8) can travel through the channel in the longitudinal direction, said carriage (8) being provided therefor with rollers (15, 16) and a drive, and which storage system is provided with devices for lifting a loaded pallet, characterized in that the roller-carrying surfaces of the rails (5, 6, 7) are attached outside the dimensions of the pallets (12) for which the channel is provided, in that the travelling arms (13, 14) of the carriage (8) are situated in the positions corresponding to the roller-carrying surfaces of the rails (5, 6, 7) outside the pallet width, in that the carriage (8) comprises an elevated section (11) at one end and is provided with a fork (24) at such a height that the prongs can be inserted into the insertion openings in the pallets, while devices (25 to 27) are attached to the elevated section (11) to permit raising and lowering of the pallet by means of the fork (24) over a height sufficient to be able to keep pallet and load free of the parts of the rack during displacement of the carriage (8) in the channel.

2. A system according to claim 1, characterized in that the carriage (8) can be coupled (via 34 and 35) to a fork board (33) on the pole (10) of a lifting vehicle

3. A system according to claim 1 or claim 2, the vertical members (1, 2) standing at twice the pallet dimension (of 120 cm), characterized in that in each section three rails (5, 6, 7) are attached between adjacent row of vertical members, the central one (6) of these rails being provided for both adjacent pallet positions.

4. A system according to claim 1 or claim 2, the vertical members standing at twice the pallet dimension (of 120 cm), characterized in that four rails are attached at such distances that in each section three channels are formed between adjacent rows of vertical members, in which channels it is possible to store pallets widthways (80 cm), every second and third rail being usable by two adjacent channels.

5. A system according to any one of the preceding claims, characterized in that the fork (24) of the carriage (8) comprises three fixed positions, i.e. a high position, a low position and an intermediate position.

6. A system according to any one the preceding claims, characterized in that the travelling arms (13, 14) of the carriage are provided with locator rollers (20) for introduction into the rails.

7. A system according to claim 6, characterized in that each of the vertical members is provided at the front with an insertion piece (21) with sloping guide faces opposite the rails lying each side.

8. A system according to any one of the preceding claims, characterized in that the travelling arms (13, 14) are provided with guide rollers (17, 18) for the sides of the pallets.

9. A system according to any one of the preceding claims, characterized in that the travelling arms (13, 14) are provided with guide rollers (22, 23) with respect to the rails (5, 6, 7).

10. A system according to any one of the preceding claims, characterized in that the carriage (8) is driven electrically by a cable connection (31) from the fork lift truck (9).

## Revendications

1. Système de stockage pour palettes (12) comprenant un rayonnage de palettes avec un ou plusieurs chariots ainsi qu'un dispositif de transport frontal, le rayonnage de stockage étant réalisé à partir de montants qui sont reliés entre eux par des longerons (1, 2) et des traverses (3, 4), des canaux de stockage de palettes étant ainsi formés dans chaque casier sur différents niveaux de support et des rails (5, 6, 7) étant disposés dans le sens longitudinal de chaque canal sur les traverses du rayonnage sur lesquels un chariot (8) peut traverser le canal dans le sens longitudinal, lequel est muni de galets de roulement (15, 16) et d'un entraînement pour ceux-ci, et des dispositifs pour la levée d'une palette chargée, caractérisé en ce que les surfaces des rails (5, 6, 7) portant les galets sont disposées en dehors des dimensions des palettes (12) pour lesquelles est prévu le canal; que les bras de translation (13, 14) du chariot (8) se situent à des endroits en dehors de la largeur des palettes correspondant aux surfaces des rails (5, 6, 7) portant les galets, que ledit chariot présente à l'une des extrémités un mât (11) et est muni d'une fourche (24) à une hauteur telle que les dents peuvent être engagées dans les ouvertures d'emboitement des palettes, tandis que le mât (11) est pourvu de dispositifs (25 à 27) permettant de monter et d'abaisser la palette à l'aide de la fourche (24) sur une hauteur qui est suffisante pour pouvoir garder la palette et la charge hors de portée des éléments du rayonnage pendant le déplacement du chariot (8) dans le canal.

2. Système selon la revendication 1, caractérisé en ce que le chariot (8) peut être couplé (par l'intermédiaire de 34, 35) à une chape (33) du mât (10) d'un chariot élévateur à fourche.

3. Système selon l'une des revendications 1 ou 2, l'écartement des montants (1, 2) étant égal au double de la dimension des palettes (de 120 cm), caractérisé en ce que dans chaque casier sont disposés entre des rangées de montants voisines trois rails (5, 6, 7) dont le rail médian (6) est prévu pour les deux emplacements de palette juxtaposés.

4. Système selon l'une des revendications 1 ou 2, l'écartement des montants étant égal au double de la dimension des palettes (de 120 cm), caractérisé en ce que quatre rails sont disposés à des intervalles tels que dans chaque casier, entre des rangées de montants voisines, sont formés trois canaux dans lesquels des palettes peuvent être stockées dans le sens de la largeur (80 cm), chacun des deuxième et troisième rails pouvant être utilisé pour deux canaux juxtaposés.

5. Système selon l'une des revendications précédentes, caractérisé en ce que la fourche (24) du chariot (8) comporte trois positions fixes, à savoir une position haute, une position basse et une position intermédiaire.

6. Système selon l'une des revendications precédentes, caractérisé en ce que les bras de translation (13, 14) du chariot sont munis de galets de recherche (20) pour l'engagement dans les rails.

7. Système selon la revendication 7, caractérisé en ce que chacun des montants est muni à la face avant d'un élément d'entrée (21) avec des surfaces de guidage inclinées par rapport aux rails situés des deux côtés.

8. Systéme selon l'une des revendications précédentes, caractérisé en ce que les bras de translation (13, 14) sont munis de galets de guidage (17, 18) pour les côtés des palettes.

9. Système selon l'une des revendications precédentes, caractérisé en ce que les bras de translation (13, 14) sont munis de galets de guidage par rapport aux rails (5, 6, 7).

10. Système selon l'une des revendications précédentes, caractérisé en ce que le chariot (8) est entraîné électriquement à partir du chariot élévateur à fourche (9) par l'intermédiaire d'une liaision par câble.

*Fig:1.*

*FIG. 2.*

Fig. 4.

Fig. 3.

Fig. 5.

5

20

3

2

21

2

_Fig. 6._

34

35

33

_Fig. 7._

Fig. 8.